# EUROPEAN PATENT SPECIFICATION

(11) **EP 2 822 121 B1**
(45) Date of publication and mention of the grant of the patent: **02.05.2018**
(21) Application number: 14175515.7
(22) Date of filing: 03.07.2014
(51) Int. Cl.: H02G 3/12, H02G 3/08

(54) **An extender assembly for an electrical wiring box**
Verlängerungsanordnung für eine elektrische Verdrahtungsdose
Ensemble d'extension d'une boîte de câblage électrique

(30) Priority: 05.07.2013 DK 201370377
(43) Date of publication of application: 07.01.2015
(73) Proprietor: Schneider Electric Danmark A/S, 2750 Ballerup (DK)
(72) Inventor: Jensen, Per, 2770 Kastrup (DK); Mouritsen, Jan, 2830 Virum (DK)
(74) Representative: Awapatent A/S

(56) References cited:
- EP-A1- 1 382 757
- DE-A1- 3 403 053
- GB-A- 358 148
- GB-A- 1 297 790
- US-A- 3 720 783

## Description

The present invention relates to an extender assembly, more specifically an extender assembly for an electrical wiring box defining an inner compartment, the inner compartment defining a first aperture, the extender assembly comprising a first extension member adapted to be located at the first aperture, the first extension member comprising a first generally cylindrical wall having a first inside surface, a first outside surface, a first distal end adapted to be located at the first aperture, and a first proximal end.

Electrical wires or cables are frequently drawn behind walls or above ceilings to be kept invisible. At locations where electrical devices, such as lamp outlets, sockets, switches or the like are to be placed in the wall or ceiling, an electrical wiring box is located behind the wall or ceiling. When installing the electrical device (in the following also denoted installation device) a hole corresponding to the electrical wiring box (in the following also denoted electrical installation box, installation box, wiring box, or simply "box") is cut in the wall or ceiling board (in the following also simply denoted "board"), typically using a cup drill bit resulting in a circular hole corresponding largely to a cylindrical wall part of the installation box forming an inner compartment in the installation box. In the inner compartment of the electrical installation box, the electrical wires or cables are connected to the electrical device. Finally the installation device is placed in the hole in the wall and fixed e.g. by means of screws engaging the installation box. One such installation box is disclosed in the document: 'Installationsvejledning til PL dase 55mm/16mm, 35/16mm og 55mm/16mm dase i skibsudforelse og 52mm/20mm', LK as, 2000, available from internet. <URL: http://www1.lk.dk/katalog/vejledning/97693_04.pdf> 28 June 2013.

If the boards comprise inflammable material, the hole made in the wall board must be protected by the wall of the installation box, comprising fire protecting self-extinguishing material, in order to prevent fires from electrical arcs or wires heated by over currents. The wall of the box needs not be an integral wall. Alternatively or additionally, it may be needed to impede or prevent dust and other particles to enter the installation box from the wall or ceiling. Accordingly, an extension device lining the hole in the wall boards may be used.

However, walls differ and so does the distance from the surface of the wall to the installation box behind it, e.g. because multiple layers of board are used. DE 34 03 053 A1 discloses an extender corresponding to the preamble of claim 1. It is further known to provide the inside of the cylindrical wall of the installation box with a thread and to provide the outside wall of a likewise cylindrical extender with a matching thread, thus allowing the extender to be screwed a predetermined distance into the installation box, i.e. until the outer end of the extender is flush with the wall surface. Installing this extender may be relatively cumbersome, as it may need to be turned quite a few turns if the predetermined distance is large, e.g. if the thickness of the wall or ceiling board is small. This is in particular the case when the installation box is behind a ceiling board, and the installation of the extender is to be performed standing on a ladder and working overhead.

Based on this prior art, it is the object of the present invention to provide an improved extender assembly which may readily be mounted in connection with an installation box.

According to the invention, this object and other objects of the invention is achieved by an extender assembly according to the opening paragraph characterized in that the first generally cylindrical wall comprises at least one tear guide adapted to facilitate a separation of the first proximal end from the first distal end.

According to the invention, the above-mentioned object and other objects of the invention is achieved by a method for adjusting the length of an extender assembly according to the present invention. For adjusting the extender assembly (or at least the first extension member) to have a shorter length, the method may comprise creating a first slit from the first proximal end to at least a desired one of the at least one tear guides, and separating the first proximal end from the first distal end by performing a tearing action from the first slit and along the desired one of the at least one tear guides. For adjusting the extender assembly to have a longer length, the method may comprise pushing a second extension member in a direction towards the first distal end while the second extension member is in engagement with the first extension member, and screwing (or unscrewing) the second extension member in a direction away from the first distal end, e.g. to achieve a desired length of the assembly.

By providing the at least one tear guide it becomes possible to shorten the extender assembly without using a tool, such as a cutting tool, such as a knife, for detaching (such as cutting off) a part of the first extension member. Accordingly, it becomes safer to detach a part of the first extension member. Furthermore, shortening of the extender assembly may be easier using a tear guide than using a tool for the separation process. Furthermore, using a tear guide may result in a more even and/or precise detachment. In order to tear off a part of the first extension member it may be necessary to first create a slit from the proximal end towards the at least one tear guide, such as a selected one of a plurality of tear guides. Such a slit may be created by use of an initial tear guide part. However, a tool, such as a pair of diagonal cutting pliers, may alternatively or additionally be utilized for creating a slit towards the at least one tear guide, such as a selected one of a plurality of tear guides. Use of a tool for such an action will however still provide the above-mentioned advantages for detaching a part of the first extension member.

According to an embodiment of the present invention, the at least one tear guide comprises at least one annular tear guide, such as a plurality of annular tear guides. Provision of an annular tear guide facilitates a complete and even separation, such that the end which is then formed by the tear action can be flush with e.g. a ceiling.

According to an embodiment of the present invention, the at least one tear guide comprises at least one annular groove in the first generally cylindrical wall. Thereby it becomes very easy to shorten the first extension member by e.g. simply cutting from the proximal end of the first extension member to the groove using e.g. diagonal cutter pliers, and then tearing the proximal end part away along the groove, where the first generally cylindrical wall is thinner.

According to the present invention, any other (or additional) type of tear guide is possible, such as, but not limited to, a series of adjacent perforations and/or a tear strip, etc.

According to an embodiment of the invention, the at least one tear guide, such as the at least one annular groove, is provided in the first outside surface. This makes it very easy to identify how far one should cut using e.g. the diagonal cutter pliers. Also it may allow for a better implementation of the first thread means in the first inside surface, which then facilitates the insertion of a second extension member in the first extension member and holding it there using the first thread means. This, as will be explained further below, has some advantages over the opposite situation, i.e. inserting the second extension member outside the first extension member.

According to an embodiment of the present invention, the first extension member comprises snap acting means adapted to engage the electrical wiring box, e.g. at the first aperture. This allows the extender assembly to be mounted on (and/or secured to) an existing installation box, which, as can be understood from 'Installationsvejledning til PL dase 55mm/16mm, 35/16mm og 55mm/16mm dåse i skibsudforelse og 52mm/20mm', will often be mounted behind the wall or ceiling board long before the access hole is cut in the wall or ceiling board. It is however not excluded that for some embodiments the first extension member forms an integral part of the electrical wiring box.

According to an embodiment of the present invention, the first extension member comprises a first thread means. Provision of a first thread means facilitates that a second extension member (e.g. as described below) is connected in an adjustable manner to the first extension member, e.g. a lengthwise adjustable manner for providing an adjustable extension of the first extension member.

According to an embodiment or an aspect of the present invention, the first extension member may be provided without the tear guide, such as without the tear guide and with the first thread means. Accordingly, all advantages associated with connecting a second extension member to the first extension member may be maintained for such an embodiment and/or aspect.

A thread means according to the present invention may include any features providing the functionality of a thread, such as a thread or parts of a thread.

According to an embodiment of the present invention, the extender assembly further comprises a second extension member having a second generally cylindrical wall with a second inside surface, a second outside surface a second proximal end, a second distal end, and a second thread means adapted to engage the first thread means. This allows easy mounting of the second extension member as the first and second extension members may simply be pushed together in a telescopic manner, until the desired height is reached, e.g. when the proximal end of the second extension member lies flush with the outer surface of the wall or ceiling board. If the second extension member is inadvertently pushed too far, the thread readily and intuitively allows the second extension member to be unscrewed to the correct position.

According to an embodiment, a suitable inclination of at least the part(s) of the first thread means and/or the second thread means, which part(s) faces (or is configured to face) the other extension member is provided. A suitable inclination facilitates at least that the second extension member may be pushed together with the first extension member, while it may impede a longitudinal movement in the opposite direction.

According to an embodiment, the first thread means comprises a plurality of protrusions and the second thread means comprises a second thread with multiple turns. This allows the second extension member to be unscrewed quickly and efficiently, while the protrusions offer little resistance when pushing the first and second extension members together.

According to an embodiment, the first thread means is provided at the first inside surface and the second thread means is provided at the second outside surface. This is advantageous when the hole provided in the wall is only slightly larger than the diameter of the extender assembly, because access to the inside of the second extension member for unscrewing it is not hindered by the wall or ceiling board.

According to an embodiment, the first thread means is provided at the first outside surface and the second thread means is provided at the second inside surface. Fur such embodiment it may be important that the second generally cylindrical wall has a larger longitudinal length than the first generally cylindrical wall such that it may still be possible to use a finger to unscrew the second extension member from the second inside surface at any time.

According to an embodiment, the protrusions form a first thread means with less than one turn. This allows good guiding of the first and second extension members when unscrewing the second extension member.

According to an embodiment, the first thread means (e.g. the plurality of protrusions) is distributed at separate annular locations around the circumference (e.g. the inner circumference) of the first generally cylindrical wall. Furthermore, the locations may include adjacent locations being separated by at least 30 degrees, preferably at least 45 degrees, and more preferably at least 60 degrees. A distribution at separate annular locations allows for the first extension member and/or second extension member to deform at least locally when pushing them together and thus facilitates this. This may in particular be the case when, according to an embodiment, the protrusions are distributed at an odd number of separate annular locations, the odd number preferably being three. Thus there will not be to diametrically opposite protrusions and the first and second extension members will not have to be simultaneously deformed in opposing directions.

According to an embodiment at least some adjacent protrusions of the plurality of protrusions are separated by at least 30 degrees, preferably at least 45 degrees, and more preferably at least 60 degrees. This has been found to be suitable for if e.g. the protrusions are not simple bosses but have some angular extension.

According to an embodiment, the second thread means comprises a multiple-start thread, preferably a three-start thread. Having a multiple-start thread allows a high lead, which, in turn, allows the second extension member to be quickly unscrewed from the first extension member if they are inadvertently pushed too far together.

According to an embodiment, the second thread means comprises a stop. This prevents the first and second extension members from inadvertently being separated, e.g. during storage.

According to an embodiment, the second inner surface comprises means for improving digital grip. This facilitates the unscrewing of the second extension member from the first extension member using a finger inserted in to the second extension member.

According to an embodiment, the means for improving digital grip comprises a plurality of ribs. Suitably spaced ribs allow the unscrewing using a finger, such as an index finger, inserted into the second extension member.

According to an embodiment of the present invention, the first thread means is provided at least at the first proximal end. Having the first thread means at least at the first proximal end facilitates in enabling a large length of the extender assembly when the second extension member is engaged with the first extension member.

According to an embodiment of the present invention, the first thread means is dispersed along the longitudinal direction of the first generally cylindrical wall. An advantage of such dispersion is that a second extension member may be able to engage the first thread means (or a part of the first thread means) even after a separation of the proximal end of the first extension member.

The present invention will now be described in greater detail based on non-limiting exemplary embodiments and with reference to the drawings on which:
fig. 1 is an exploded isometric view of an installation box with an extender assembly comprising first and second extension members according to the invention,
fig. 2 is an isometric view of the first extension member of fig. 1 but seen from a different angle,
fig. 3 is a side elevation view of the first extension member of fig. 1,
fig. 4 is a cross-sectional view illustrating a half-section of the first extension member of fig.1 taken along a diameter,
fig. 5 is a top plan view from the proximal end of the first extension member of fig. 1,
fig. 6 is a top plan view of an alternative embodiment of the first extension member,
fig. 7 is a side elevation view of the second extension member of fig. 1,
fig. 8 is a cross-sectional view illustrating a half-section of the second extension member of fig. 1,
fig. 9 is a top plan view from the proximal end of the second extension member of fig. 1,
figs. 10 to 13 are cross-sectional views of the installation box with the extender assembly in the assembled state and mounted in various ceiling constructions, and
fig. 14 is an isometric view of an alternative embodiment of the first extension member.

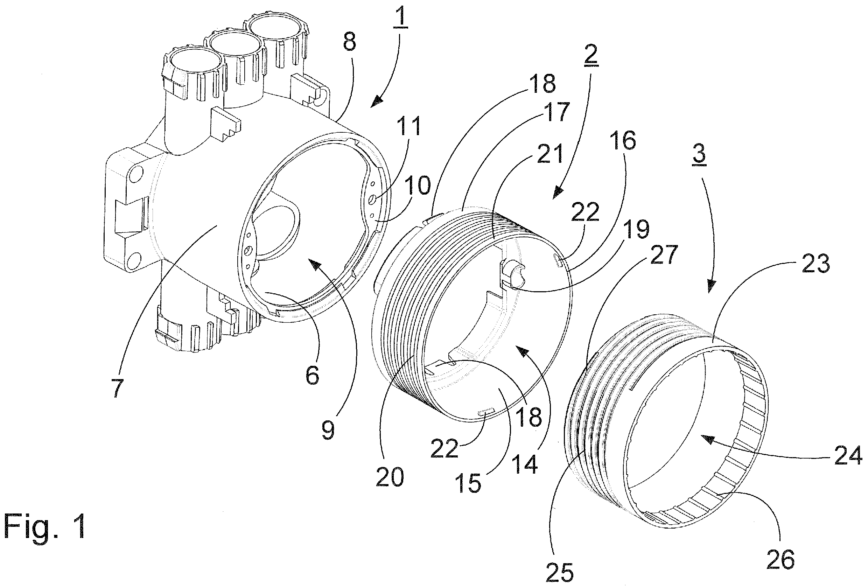

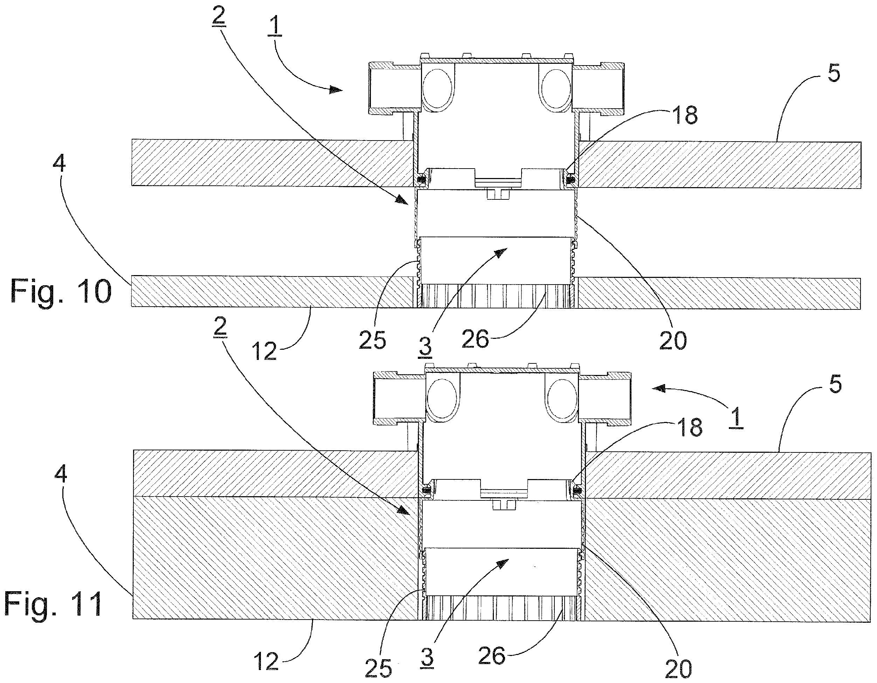

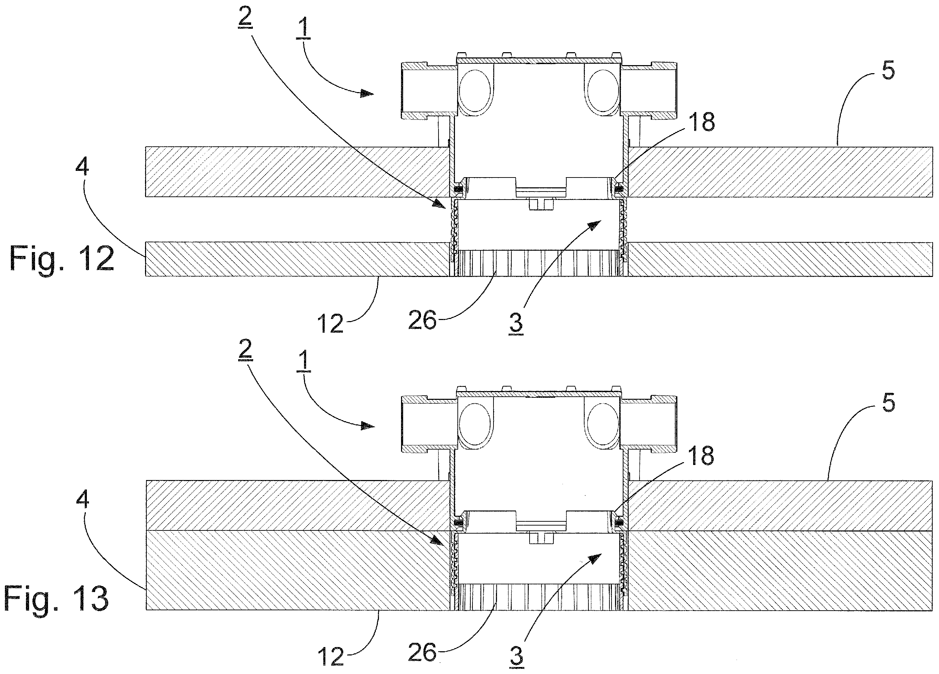

Turning first to fig. 1 an installation box 1 with a first extension member 2 and a second extension member 3 is illustrated. The installation box 1 in fig. 1 is a prior art installation box 1 as disclosed in 'Installationsvejledning til PL dåse 55mm/16mm, 35/16mm og 55mm/16mm dåse i skibsudforelse og 52mm/20mm', mentioned above. The invention may however also be implemented with other prior art installation boxes as well as any other installation boxes, such as in future installation boxes. Without deviating from the general inventive idea, the features of the first extension member 2 may even be integrated in the installation box 1. The electrical wiring box 1 has a generally cylindrical wall 7 defining an inner compartment 6, the inner compartment defining a first aperture 9 at a proximal end 8 of the installation box 1. Here, and in the following, proximal and distal are to be understood in relation to normal access. That is to say, proximal is facing the user at a front surface 12 of a wall or a ceiling board 4 as illustrated in figs. 10 to 13, and the distal end is away from the user behind the front surface of 12 the wall board or ceiling board 4. For convenience the remainder of the description will refer to ceiling boards 4 only, as it is not important for the invention whether it is installed with one or the other. It is also to be understood that the term board is used in a broad sense including all panels possibly used in walls and ceilings. At the proximal end 8 the known installation box 1 comprises a metal ring 10 with suitable bores 11 adapted to receive mounting screws for securing and holding an installation device or the like in place at the installation box 1. The metal ring 10 may rotate freely and the installation device may thus be placed in any suitable orientation with respect to the plane of the surface 12 of the ceiling board 4.

As can be seen from comparison between the various figures 10 to 13 ceilings may differ in the sense that there are different distances from the front surface 12 of the ceiling board 4 to the proximal end 8 of the installation box 1. If the material in the area between the proximal end of the installation box 8 and the front surface 12 of the ceiling board comprises inflammable material, this must be protected by the installation box 1. Therefore (and for other possible reasons such as mentioned above) an extender assembly may be needed in order to provide a lining of self-extinguishing material where this is not provided by the box 1 itself.

This can be achieved using the first extension member 2. The first extension member 2 comprises a generally cylindrical body 14 defining a through passage delimited by a wall 15 between a proximal end 16 and distal end 17. At the distal end 17 engagement means (or snap acting means) 18 in the form of resilient snap acting hooks are provided. The resilient snap acting hooks are adapted to engage behind the metal ring 10 so as to hold the first extension member 2 in position. The engagement is readily releasable as the first extension member 2 serves only as lining, and does not take any part in securing installation devices or the like. As explained, installation devices may be secured in the holes 11 in the metal ring 10 of the installation box 1. The first installation member 2 is therefore provided with suitable passages 19 for such screws. The inside surface of the wall 15 is provided with a first thread means comprising a number of protrusions 22, which allows the addition (engagement) of the second extension member 3. This will be explained in greater detail below. On the outside surface of the wall 15 a number of circumferential grooves 20 are provided. In the embodiment illustrated there are 6 grooves, but there could be less or more, such as 2, 3, 4, 5, or 7, etc. Where these grooves are located, the thickness of the wall is smaller and the wall accordingly weaker. Thus, if an outer part 21 including the proximal end 16 and a first groove 20 is cut, e.g. using diagonal cutter pliers, the outer part may be removed by ripping (or tearing) along the first groove 20. Similar if the cut is made deeper to any subsequent groove 20. Accordingly, the first extension member may readily be adapted in height to suit the distance from the proximal end 8 of the installation box 1 to the front surface 12 of the ceiling board 4.

If, on the other hand, the first extension member 2 is too short to cover the distance from the proximal end 8 of the installation box 1 to the front surface 12 of the ceiling board 4, the above-mentioned protrusions 22 allow the first extension member 2 to receive and hold the second extension member 3.

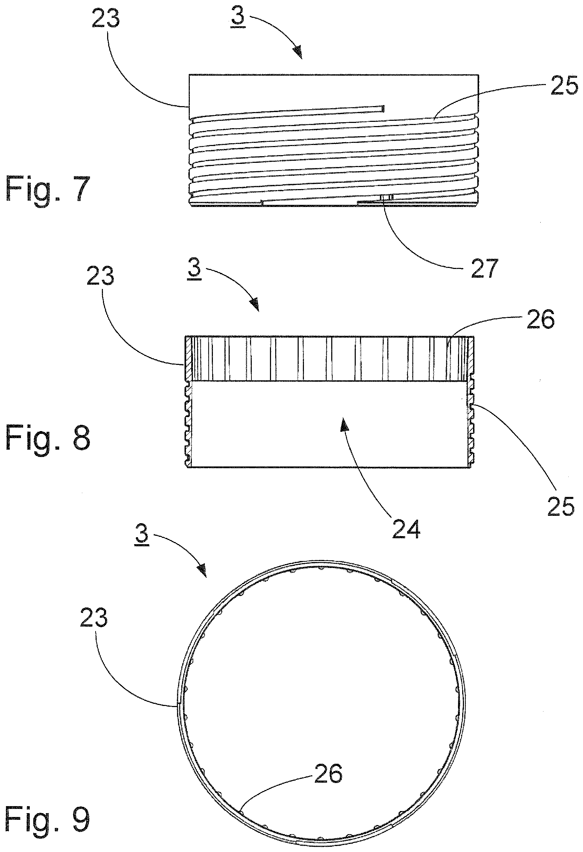

As can be seen from fig. 1 the second extension member 3 is a generally cylindrical element with a generally cylindrical wall 23 defining a through passage 24. The outside diameter of the second extension member 3 is generally smaller than the inside diameter of the first extension member 2, so as to allow the second extension member 3 to be inserted in the first extension member 2. In the outside surface of the generally cylindrical wall 23 a thread 25 is provided. The thread 25 is preferably a multi-turn, multiple-start thread, such as three starts each having two to three turns. The protrusions 22 of the first extension member 2 provide a thread means in the sense that they are adapted to engage the thread 25 of the second extension member 3, and/or vice versa. The inside surface of the generally cylindrical wall 23 is provided with a number of ribs 26 extending in the radial and longitudinal direction of the generally cylindrical wall 23. The ribs 26 are adapted to be engaged by a finger such as an index finger in order to turn the second extension member 3 allowing it to be screwed out of the first extension member 2. In order to avoid unscrewing the second extension member 3 entirely from the first extension member 2, a stop 27 is preferably located in the vicinity of at least one of the starts of the thread 25, as can best be seen in fig. 7. This also serves to keep the first and the second extension members 2, 3 together during storage.

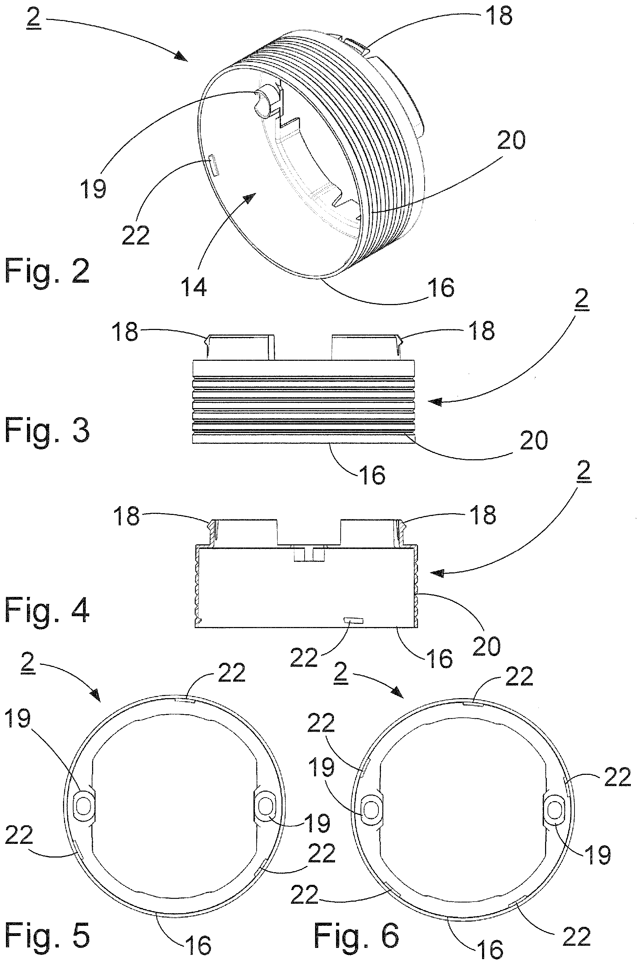

Evidently the second extension member 3 may not only be unscrewed from the first extension member 2 but also be screwed in to the first extension member 2 until a desired overall height is reached. This is however not the intention of the invention. The intention is to simply press the first extension member 2 and the second extension member 3 together in a telescopic manner, i.e. simply pushing the second extension member 3 into the first extension member 2 until the proximal end of the second extension member lies flush with the surface of the ceiling board 4 as illustrated in figs. 10 to 13. Only if pushed too far it may be necessary to actually turn the second extension member 3. The thread 25 of the second extension member 3 and the protrusions 22 of the first extension member 2 have been constructed to facilitate this. Thus only few protrusions 22 are used, e.g. three or five, as illustrated in fig. 5 and fig. 6, respectively. This allows for localised deformation of the first extension member 2 and/or the second extension member 3 allowing, in turn, the disengagement of the protrusions 22 from the thread 25 in order for them to slide across between turns of the thread 25 or between starts, rather than following the thread. This is preferably furthermore facilitated by a suitable inclination of at least the part(s) of the first thread means and/or the second thread means, which part(s) faces the other extension member. This is explained further below. The number of protrusions 22 is preferably odd, such as three or five as mentioned above, in order to avoid having diametrically opposing protrusions 22 where deformations would counteract each other. The number of protrusion 22 preferably matches the number of starts of the thread 25 of the second extension member 3. To facilitate deformation, the second extension member 3 is preferably made of thinner and/or more flexible material than the first extension member 2. Preferably, the protrusions 22 are short sectors of thread, having the same lead angle as the thread 25. The angular extension of the protrusions 22 may be longer than illustrated (and may even be a complete thread) but should in any case preferably only cover a short fraction of the circumference of the first extension member 2, i.e. be substantially less than a full turn. Preferably, the protrusions 22 (or at least some adjacent protrusions 22) are separated by at least 30 degrees, preferably at least 45 degrees, and more preferably at least 60 degrees. The protrusions 22 are preferably asymmetrical in cross-section. That is to say, the flank towards the distal end 16 of the first extension member 2 is steeper than the flank towards the proximal end 17. This facilitates the sliding motion of the protrusions 22 across the threads 25 when pushing the first extension member 2 and second extension member 3 together, and counteracts the opposite motion, thus securing the first and second extension members 2, 3 from becoming inadvertently separated. The cross-section of the thread 25 of the second extension member 3 may on the other hand be symmetrical. However, the cross-section of the thread 25 of the second extension member 3 may additionally or alternatively be asymmetrical in cross-section.

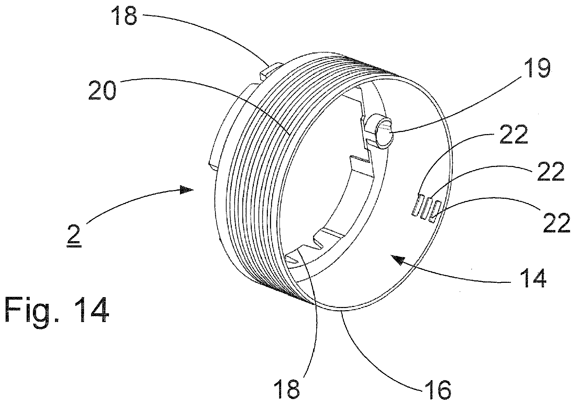

It has been found that providing the protrusions 22 only at the proximal end 16 of the first extension member 2 suffices for holding the second extension member 3. The protrusions 22 may be located in such a manner that they will be departed with the proximal end 16, if the proximal end is broken away along the tear guide, i.e. if the first extension member 2 is severed along the groove 20. Subsequently the first extension member 2 will no longer be able to hold the second extension member 3, but that is of less importance as the intention in this case is to shorten the extender assembly to a lower height than the first extension member 2 rather than extending the extender assembly by using a second extension member 3. It is however not excluded that there can be more protrusions 22, and fig. 14 illustrates an embodiment of a first extension member wherein the first thread means (protrusions 22) is dispersed along the longitudinal direction of the first generally cylindrical wall.

With the present invention an extender assembly comprising novel and inventive extension members 2, 3 which may be used both individually and in conjunction, in particular the first extension member 2 may advantageously used alone in conjunction with an existing installation box 1, i.e. without the use of the second extension member 3. The skilled person will realise that in that case the first thread means in the form of protrusions 22 could be dispensed with. The skilled person will also realise that even though less practical, the second extension member could 2 have a larger diameter than the first extension member if the surface features such as the annular grooves 20, protrusions 22, thread 25 and ribs 26 are moved from inner surfaces to outer surfaces and vice versa.

## Claims

1. An extender for an electrical wiring box (1) defining an inner compartment (6), the inner compartment (6) defining a first aperture (9), the extender comprising
a first extension member (2) adapted to be located at the first aperture (9), the first extension member (2) comprising a first generally cylindrical wall (15) having a first inside surface, a first outside surface, a first distal end (17) adapted to be located at the first aperture (9), a first proximal end (16) and a first thread means (22),
**characterized in that**
the first generally cylindrical wall (15) comprises at least one tear guide (20) adapted to facilitate a separation of the first proximal end (16) from the first distal end (17), and **in that** the first thread means (22) is adapted to engage a thread (25) of a second extension member (3).

2. An extender according to claim 1, wherein the at least one tear guide (20) comprises a plurality of annular tear guides.

3. An extender according to any one of the preceding claims, wherein the first thread means (22) is provided at least at the first proximal end (16).

4. An extender according to any one of the preceding claims, wherein the first thread means (22) is dispersed along the longitudinal direction of the first generally cylindrical wall (15).

5. An extender according to any one of the preceding claims, wherein the first extension member (2) comprises snap acting means (18) adapted to engage the electrical wiring box (1).

6. An extender according to any one of claims 1 to 4, wherein the first extension member (2) forms an integral part of the electrical wiring box (1).

7. An extender according to any one of the preceding claims, wherein the first thread means (22) comprises a plurality of protrusions.

8. An extender according to any one of the preceding claims, wherein the first thread means (22) is provided at the first inside surface.

9. An extender according to any one of the preceding claims, wherein the first thread means (22) is distributed at separate annular locations around the circumference of the first generally cylindrical wall (15).

10. An extender according to claim 9, wherein the locations include adjacent locations being separated by at least 30 degrees, preferably at least 45 degrees, and more preferably at least 60 degrees.

11. An extender assembly comprising an extender according to any one of the preceding claims, wherein the second extension member (3) is having a second generally cylindrical wall (23) with a second inside surface, a second outside surface a second proximal end, a second distal end, and a second thread means (25) adapted to engage the first thread means (22).

12. An extender assembly according to claim 11, wherein the second thread (25) comprises a stop (27).

13. A method for adjusting the length of an extender according to any one of claims 1 to 10, the method comprising
creating a first slit from the first proximal end (16) to at least a desired one of the at least one tear guides (20), and
separating the first proximal end (16) from the first distal end (17) by performing a tearing action from the first slit and along the desired one of the at least one tear guides (20).

14. A method for adjusting the length of an extender assembly according to claim 11 or 12, the method comprising
pushing the second extension member (3) in a direction towards the first distal (17) end while the second extension member is in engagement with the first extension member (2), and
screwing the second extension member (3) in a direction away from the first distal end (17).

## Patentansprüche

1. Verlängerung für eine elektrische Anschlussdose (1), die einen Innenraum (6) definiert, wobei der Innenraum (6) eine erste Öffnung (9) definiert, wobei die Verlängerung aufweist:
ein erstes Verlängerungselement (2), das dazu ausgelegt ist, an der ersten Öffnung (9) angeordnet zu werden, wobei das erste Verlängerungselement (2) eine erste allgemein zylindrische Wand (15) aufweist, die eine erste Innenfläche, eine erste Außenfläche, ein erstes distales Ende (17), das dazu ausgelegt ist, an der ersten Öffnung (9) angeordnet zu werden, ein erstes proximales Ende (16) und ein erstes Gewindemittel (22) aufweist,
**dadurch gekennzeichnet, dass**
die erste allgemein zylindrische Wand (15) mindestens eine Abreißführung (20) aufweist, die dazu ausgelegt ist, eine Trennung des ersten proximalen Endes (16) von dem ersten distalen Ende (17) zu erleichtern, und dadurch, dass das erste Gewindemittel (22) dazu ausgelegt ist, mit einem Gewinde (25) eines zweiten Verlängerungselements (3) in Eingriff zu gelangen.

2. Verlängerung nach Anspruch 1, wobei die mindestens eine Abreißführung (20) mehrere ringförmige Abreißführungen aufweist.

3. Verlängerung nach einem der vorhergehenden Ansprüche, wobei das erste Gewindemittel (22) mindestens an dem ersten proximalen Ende (16) vorgesehen ist.

4. Verlängerung nach einem der vorhergehenden Ansprüche, wobei das erste Gewindemittel (22) entlang der Längsrichtung der ersten allgemein zylindrischen Wand (15) verteilt ist.

5. Verlängerung nach einem der vorhergehenden Ansprüche, wobei das erste Verlängerungselement (2) Einrastmittel (18) aufweist, die dazu ausgelegt sind, mit der elektrischen Anschlussdose (1) in Eingriff zu gelangen.

6. Verlängerung nach einem der Ansprüche 1 bis 4, wobei das erste Verlängerungselement (2) einen integralen Bestandteil der elektrischen Anschlussdose (1) bildet.

7. Verlängerung nach einem der vorhergehenden Ansprüche, wobei das erste Gewindemittel (22) mehrere Vorsprünge aufweist.

8. Verlängerung nach einem der vorhergehenden Ansprüche, wobei das erste Gewindemittel (22) an der ersten Innenfläche vorgesehen ist.

9. Verlängerung nach einem der vorhergehenden Ansprüche, wobei das erste Gewindemittel (22) an getrennten ringförmigen Stellen um den Umfang der ersten allgemein zylindrischen Wand (15) herum verteilt ist.

10. Verlängerung nach Anspruch 9, wobei die Stellen benachbarte Stellen aufweisen, die um mindestens 30 Grad, vorzugsweise mindestens 45 Grad und weiter bevorzugt mindestens 60 Grad, getrennt sind.

11. Verlängerungsanordnung, die eine Verlängerung nach einem der vorhergehenden Ansprüche aufweist, wobei das zweite Verlängerungselement (3) eine zweite allgemein zylindrische Wand (23) mit einer zweiten Innenfläche, einer zweiten Außenfläche, einem zweiten proximalen Ende, einem zweiten distalen Ende und einem zweiten Gewindemittel (25), das dazu ausgelegt ist, mit dem ersten Gewindemittel (22) in Eingriff zu gelangen, aufweist.

12. Verlängerungsanordnung nach Anspruch 11, wobei das zweite Gewinde (25) einen Anschlag (27) aufweist.

13. Verfahren zum Anpassen der Länge einer Verlängerung nach einem der Ansprüche 1 bis 10, wobei das Verfahren aufweist:
Erzeugen eines ersten Schlitzes von dem ersten proximalen Ende (16) bis zu mindestens einer gewünschten der mindestens einen Abreißführungen (20) und
Trennen des ersten proximalen Endes (16) von dem ersten distalen Ende (17) durch Durchführen eines Abreißvorgangs vom dem ersten Schlitz aus und entlang der gewünschten der mindestens einen Abreißführungen (20).

14. Verfahren zum Anpassen der Länge einer Verlängerungsanordnung nach Anspruch 11 oder 12, wobei das Verfahren aufweist:
Schieben des zweiten Verlängerungselements (3) in einer Richtung hin zu dem ersten distalen Ende (17), während das zweite Verlängerungselement sich in Eingriff mit dem ersten Verlängerungselement (2) befindet, und
Schrauben des zweiten Verlängerungselements (3) in einer Richtung weg von dem ersten distalen Ende (17) .

## Revendications

1. Extenseur pour un boîtier de câblage électrique (1) définissant un compartiment intérieur (6), le compartiment intérieur (6) définissant une première ouverture (9), l'extenseur comprenant :
un premier élément d'extension (2) conçu pour être localisé au niveau de la première ouverture (9), le premier élément d'extension (2) comprenant une première paroi généralement cylindrique (15) ayant une première surface intérieure, une première surface extérieure, une première extrémité distale (17) conçue pour être localisée au niveau de la première ouverture (9), une première extrémité proximale (16) et un premier moyen de filetage (22),
l'extenseur étant **caractérisé en ce que**
la première paroi généralement cylindrique (15) comprend au moins un guide de cassure (20) conçu pour faciliter une séparation de la première extrémité proximale (16) de la première extrémité distale (17), et **en ce que** le premier moyen de filetage (22) est conçu pour se solidariser à un filet (25) d'un second élément d'extension (3).

2. Extenseur selon la revendication 1, dans lequel l'au moins un guide de cassure (20) consiste en une pluralité de guides de cassure annulaires.

3. Extenseur selon l'une quelconque des revendications précédentes, dans lequel le premier moyen de filetage (22) est situé au moins au niveau de la première extrémité proximale (16).

4. Extenseur selon l'une quelconque des revendications précédentes, dans lequel le premier moyen de filetage (22) est dispersé le long de la direction longitudinale de la première paroi généralement cylindrique (15).

5. Extenseur selon l'une quelconque des revendications précédentes, dans lequel le premier élément d'extension (2) comprend un moyen d'action par encliquetage (18) conçu pour se solidariser au boîtier de câblage électrique (1).

6. Extenseur selon l'une quelconque des revendications 1 à 4, dans lequel le premier élément d'extension (2) fait partie intégrante du boîtier de câblage électrique (1).

7. Extenseur selon l'une quelconque des revendications précédentes, dans lequel le premier moyen de filetage (22) comprend une pluralité de protubérances.

8. Extenseur selon l'une quelconque des revendications précédentes, dans lequel le premier moyen de filetage (22) est situé au niveau de la première surface intérieure.

9. Extenseur selon l'une quelconque des revendications précédentes, dans lequel le premier moyen de filetage (22) est distribué au niveau d'emplacements annulaires séparés autour de la circonférence de la première paroi généralement cylindrique (15).

10. Extenseur selon la revendication 9, dans lequel les emplacements incluent des emplacements adjacents séparés d'au moins 30 degrés, de préférence d'au moins 45 degrés, et plus préférablement d'au moins 60 degrés.

11. Ensemble d'extension comprenant un extenseur selon l'une quelconque des revendications précédentes, dans lequel le second élément d'extension (3) comporte une seconde paroi généralement cylindrique (23) avec une seconde surface intérieure, une seconde surface extérieure, une seconde extrémité proximale, une seconde extrémité distale et un second moyen de filetage (25) conçu pour se solidariser au filet du premier moyen de filetage (22).

12. Ensemble d'extension selon la revendication 11, dans lequel le second filet (25) comprend une butée (27).

13. Procédé de réglage de la longueur d'un extenseur selon l'une quelconque des revendications 1 à 10, le procédé consistant à :
créer une première fente de la première extrémité proximale (16) à au moins un guide de cassure souhaité de l'au moins un guide de cassure (20), et
séparer la première extrémité proximale (16) de la première extrémité distale (17) en réalisant une action de cassure à partir de la première fente et le long du guide de cassure souhaité de l'au moins un guide de cassure (20).

14. Procédé de réglage de la longueur d'un ensemble d'extension selon la revendication 11 ou 12, le procédé consistant à :
pousser le second élément d'extension (3) dans une direction vers la première extrémité distale (17) pendant que le second élément d'extension est solidarisé au premier élément d'extension (2), et
visser le second élément d'extension (3) dans une direction opposée à la première extrémité distale (17).
